# EUROPÄISCHE PATENTANMELDUNG

(11) **EP 4 349 586 A1**
(43) Veröffentlichungstag der Anmeldung: **10.04.2024**
(21) Anmeldenummer: 23185972.9
(22) Anmeldetag: 18.07.2023
(51) Int. Cl.: B32B 3/18, B32B 21/10, B32B 27/12, B32B 27/32, B32B 27/40

(54) **DEKORVERBUND MIT HARTKASCHIERTEN ABSCHNITTEN**

(30) Priorität: 10.08.2022 DE 102022120190
(71) Anmelder: Lisa Dräxlmaier GmbH, 84137 Vilsbiburg (DE)
(72) Erfinder: Paintner, Linda, 84137 Vilsbiburg (DE); Strasser, Wolfgang, 84168 Aham (DE); Schlemmer, Christian, 84034 Landshut (DE)

(57) **Zusammenfassung**

Vorgeschlagen wird ein Dekorverbund (100) für ein Fahrzeuginnenverkleidungsteil (10). Der Dekorverbund (100) weist ein Dekormaterial (130), das mit einer Seite eine Sichtseite des Dekorverbunds (100) ausbildet, einen Träger (110), der an einer der Sichtseite abgewandten Seite des Dekormaterials (130) angeordnet ist, und wenigstens eine Weichkomponente (140) oder Folie auf, die zumindest abschnittsweise zwischen dem Träger (110) und dem Dekormaterial (130) angeordnet ist. Dabei weist der Dekorverbund (100) an der Sichtseite wenigstens ein Formelement (150) auf, das zumindest abschnittsweise von wenigstens einem Hartkaschierungsabschnitt (160) umgeben und durch diesen abgesetzt ist, und wobei in dem Hartkaschierungsabschnitt (160) das Dekormaterial (130) unter Aussparung oder Schwächung der wenigstens einen Weichkomponente (140) mit dem Träger (110) verbunden ist.

## Beschreibung

### Technisches Gebiet

Die vorliegende Erfindung betrifft einen Dekorverbund für ein Fahrzeuginnenverkleidungsteil, ein damit ausgestattetes Fahrzeuginnenverkleidungsteil und ein Verfahren zur Herstellung eines solchen Dekorverbunds für ein Fahrzeuginnenverkleidungsteil.

### Stand der Technik

Fahrzeuginnenverkleidungsteile dienen in Kraftfahrzeugen, Lastkraftwagen, Waggons oder ähnlichem beispielsweise als Instrumententafel oder Cockpit, Mittelkonsole, Türverkleidung, Seitenverkleidung, als Fahrzeughimmel oder dergleichen. Ein solches Fahrzeuginnenverkleidungsteil weist häufig einen Dekorverbund mit einem Träger und einem Dekormaterial auf, wobei letzteres dem Fahrzeuginnenraum zugewandt ist und mit einer Seite die dortige Sichtseite des Fahrzeuginnenverkleidungsteils ausbildet.

Je nach z.B. Fahrzeug, Fahrzeugausstattung, Kundenwunsch, usw. kann ein solcher herkömmlicher Dekorverbund unter dem Dekormaterial, also zwischen Träger und Dekormaterial, ein Haptikmaterial, wie etwa ein Abstandsgewirke, einen Schaum oder ähnliches, aufweisen, um beispielsweise eine qualitativ anmutende Haptik, wie etwa eine weiche, eindrückbare Oberfläche, für einen Fahrzeuginsassen zu schaffen. Zur Herstellung eines solchen Dekorverbunds kann das Haptikmaterial einerseits mittels eines Klebers mit dem Träger verbunden werden und andererseits mittels eines Klebers mit dem Dekormaterial verbunden werden. Der Träger kann auch ein Textil sein, das auf einen Träger kaschiert ist, oder der Träger kann eine Trägertextilschicht, wie etwa ein Vlies, Gewebe, einen Strick, etc., aufweisen. Dies kann beispielsweise durch ein Kaschierverfahren erfolgen.

Ein herkömmlicher Dekorverbund weist häufig eine oder mehrere Nähte auf, für die auch gewünscht sein kann, dass sie sich an der Sichtseite des Fahrzeuginnenverkleidungsteils optisch abzeichnen. Hierbei werden das Dekormaterial, das Haptikmaterial und der Träger genäht, wobei durch das Haptikmaterial eine dreidimensionale Struktur entsteht. Das so gebildete Sandwich wird dann verklebt. Es hat sich in der Praxis gezeigt, dass sich bei einem solchen herkömmlichen Dekorverbund die Klebeverbindung nur schlecht und/oder ungleichmäßig ausbilden lässt.

### Beschreibung der Erfindung

Aufgabe der Erfindung ist es daher, unter Einsatz konstruktiv möglichst einfacher Mittel eine gleichmäßigere Verklebung eines Dekormaterials und/oder eines Haptikmaterials zu schaffen.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Vorgeschlagen wird ein Dekorverbund für ein Fahrzeuginnenverkleidungsteil. Der Dekorverbund weist ein Dekormaterial, das mit einer Seite eine Sichtseite des Dekorverbunds ausbildet, einen Träger, der an einer der Sichtseite abgewandten Seite des Dekormaterials angeordnet ist, und wenigstens eine Weichkomponente oder Folie auf, die zumindest abschnittsweise zwischen dem Träger und dem Dekormaterial angeordnet ist. Dabei weist der Dekorverbund an der Sichtseite wenigstens ein Formelement auf, das zumindest abschnittsweise von wenigstens einem Hartkaschierungsabschnitt umgeben und durch diesen, von z.B. allgemein von einem das Formelement umgebenden oder dazu benachbarten Bereich oder von einem oder mehreren weiteren Formelement, usw., abgesetzt ist. In dem Hartkaschierungsabschnitt ist das Dekormaterial unter Aussparung oder Schwächung der wenigstens einen Weichkomponente oder Folie, durch ein Kaschierverfahren z.B. mittels eines Klebers, durch Heißverprägen, oder dergleichen, mit dem Träger, vorzugsweise direkt, verbunden.

Der vorgeschlagene Dekorverbund, erlaubt es, dass an seiner Sichtseite unterschiedliche Formelemente, die auch Absteppungen sein oder umfassen können, ausgebildet werden können und dennoch eine gute bzw. gleichmäßige Verklebung möglich ist. Dies wird erreicht durch das Hartkaschieren, bei dem keine Weichkomponente oder nur eine deutlich reduzierte Schicht davon, oder eine Folie, zwischen dem Dekormaterial und dem Träger angeordnet ist, wodurch das Dekormaterial zumindest vollständiger an dem Träger anliegen und mit diesem verklebt werden kann. Dementsprechend kann das Hartkaschieren voneinander abgesetzte Formelemente, z.B. Absteppungen oder ähnliches, an dem Dekormaterial ermöglichen, ohne dass dies eine gleichmäßige Verklebung behindert. Dabei weisen die Formelemente, wenn darin eine Weichkomponente angeordnet ist, eine dreidimensionale (3D) Struktur auf, so dass der Dekorverbund eine hochwertig anmutende Optik aufweist. Durch das Hartkaschieren kann auch eine konturgenaue ganzflächige Kaschierung der Nahtbereiche und eine exakte Eingrenzung der Weichkomponente erreicht werden. Werden verschiedene Formelemente mit verschiedenen Weichkomponenten gefüllt, lassen sich auch unterschiedliche Muster, Haptiken, Beleuchtungen, Bedienfunktionalitäten, usw. der Formelemente in dem Dekorverbund erreichen. Bei einem smarten Zuschnitt der Weichkomponente können auch Materialreste, wie etwa Stege bzw. Reststege im Hartkaschierungsbereich verbleiben.

Der Träger ist vorzugsweise formstabil, wobei das Dekormaterial und/oder die Weichkomponente auf den Träger aufkaschiert sein kann. Unter "formstabil" ist zu verstehen, dass eine Gestalt des Träger selbsttragend bzw. eigenstabil ist; d.h., solange auf den Träger keine ausreichend starke Verformungskraft einwirkt, wird der Dekorträger nicht verformt. Der Dekorträger kann beispielsweise Holz, Glas, Metall oder einen sonstigen starren bzw. formstabilen Werkstoff als Material aufweisen. Insbesondere kann der Träger Kunststoff aufweisen oder aus diesem gebildet sein, etwa aus ABS (Acrylnitril-Butadien-Styrol), PMMA (Polymethylmethacrylat), PP (Polypropylen), PC (Polycarbonat), PU (Polyurethan), ABS-PC (Blend) etc. Es ist denkbar, dass der Kunststoff als eine Matrix für Verstärkungsfasern, etwa Natur-, Metall- oder Kohlen-stofffasern eingesetzt wird, daher sind auch Materialien wie PP-GF, PU-GF, NF-PP, NFF-Carbonfaser, usw.. für den Träger denkbar. Zudem kann der Träger lichtdurchlässig oder lichtdurscheinend, d.h. transluzent oder transparent, oder lichtundurchlässig ausgebildet sein.

Die Sichtseite des Dekorverbunds ist die Seite des Dekormaterials, die in bestimmungsgemäßer Einbaulage des Dekorverbunds, d.h., wenn der Dekorverbund bestimmungsgemäß in ein Fahrzeug, insbesondere Kraftfahrzeug, eingebaut wurde, in dessen Innenraum weist. Andererseits weist das Dekormaterial eine Rückseite auf, die in bestimmungsgemäßer Einbaulage vom Innenraum weg weist. Das Dekormaterial kann als Dekorzuschnitt bereitgestellt werden. Optional kann es zudem eine Beschichtungsseite aufweisen, die von der Dekorseite über eine Stärke bzw. Dicke des Dekorzuschnitts beabstandet ist. Die Beschichtungsseite kann mittels eines Glättungsprozesses bearbeitet sein. Zwischen der Dekorseite und der Beschichtungsseite erstreckt sich der Dekorzuschnitt dominierend zweidimensional. Bei dem jeweiligen Dekorzuschnitt handelt es sich also insbesondere um Planware aus einem Textil, aus einem textilartigen Stoff, aus Leder und/oder aus Kunstleder. Ferner sind Foliengebilde aus diesen oder anderen Materialien denkbar, etwa aus TPO (Thermoplastische Polyolefine) etc. Als Material für den jeweiligen Dekorzuschnitt kommen zudem natürliche, nachwachsende und/oder synthetische Lederersatzstoffe (z.B. Apfelleder, Pilzleder, Eukalyptusleder, Ananasleder etc.), heißverprägte oder nicht heißverprägte Textilien, Softskinmaterial, wie etwa direktbeschichtetes Abstandsgewirke, oder dergleichen, infrage. Weitere Möglichkeiten sind Alcantara ^{®} oder Dinamica ^{®}. Zudem ist ein Materialgebilde aus einem Mischmaterial denkbar, das zum Beispiel eines oder mehr der vorgenannten Materialien aufweist. Überdies kann der Dekorzuschnitt mehrschichtig, zum Beispiel aus einer Leder- oder Kunstlederschicht und einer Textil- oder Vliesschicht, ausgebildet sein. Kommen zwei oder mehr Dekorzuschnitte zum Einsatz, können diese von gleichem oder von unterschiedlichem Material sein. Das jeweilige Material kann transparent oder nichttransparent und/oder durchlässig oder nichtdurchlässig für akustische Wellen sein . Der Dekorzuschnitt kann an dessen Beschichtungsseite mit einem Polymer ganz oder partiell vorbeschichtet sein, wobei das Polymer insbesondere transparent ist. Die Vorbeschichtung dient z.B. zur Bindung von Fasern und kann Additive, wie etwa Wachse, Öle, Farbpigmente, usw., aufweisen. Zudem wird dem Dekorzuschnitt mittels der Vorbeschichtung eine verbesserte Beschneidefähigkeit verliehen. Des Weiteren kann eine, z.B. auch durchgehende, Perforierung des Dekorzuschnitts bzw. Dekormaterials mit einem, z.B. auch transparenten oder lichtdurchlässigen Material, ausgefüllt werden. Ein Anwendungsbeispiel ist das teilweise Einbetten des Textilrückens eines Kunstleders. Der Dekorverbund kann aus Schichten gebildet sein, von dem das Dekormaterial eine Schicht, insbesondere die der Sichtseite zugewandte, oberste Schicht, ausbilden kann. Das Dekormaterial kann perforiert sein, um z.B. lichtdurchlässig zu sein, oder unperforiert sein. Die Perforation kann mit einem transparenten oder lichtdurchlässigen Material befüllt sein oder nicht befüllt sein. Es kann auch lichtdurchlässige oder lichtundurchlässige Eigenschaften aufweisen. Zudem kann das Dekormaterial bedruckt, bestickt und/oder gefärbt sein, insbesondere auch im Bereich der Formelemente. In dem Dekorverbund können das Dekormaterial, das auch als Dekorelement bezeichnet werden kann, und die Weichkomponente als Schichten ausgebildet und bezeichnet werden.

Eine weitere Möglichkeit ist es, dass die eine oder mehreren Weichkomponenten z.B. durch einen Materialspender auf einer Positionsplatte/Fixierplatte positioniert werden. Auf diese Weichkomponente wird ein mit Kleber/Polymer beschichtetes Dekor, mit Kleber zur Weichkomponente hin, positioniert. Durch einen nachfolgenden Kaschierprozess wird diese Klebstoffschicht aktiviert und Dekor und Weichkomponenten miteinander verbunden. Dieses Sandwich wird anschließend auf dem Träger positionsgenau vorfixiert und anschließend z.B. presskaschiert. Durch die Formgebung der Presse entsteht die 3D Struktur des Dekors auf dem Träger wodurch das Dekor mit dem Träger kaschiert wird, und Vertiefungen entstehen.

Der hierin verwendete Begriff "Formelement" kann breit verstanden werden, beispielsweise als jedes zweidimensionale (wenn es vernachlässigbar wenig von oder gar keine Weichkomponente oder Folie aufweist) oder dreidimensionale Element (wenn es die Weichkomponente aufweist), das sich an der Sichtseite des Dekorverbunds und/oder des Dekormaterials optisch abzeichnet. Dabei kann das zweidimensionale Formelement im Wesentlichen flach, plan oder unerhaben sein und durch den Hartkaschierabschnitt zumindest abschnittsweise eingefasst sein. Das zweidimensionale Formelement kann eine geometrische Form aufweisen, wie etwa die einer Raute, eines Kreises, einer Ellipse, eines Rechtecks, eines Tropfens, eines Symbols, usw. Bei dem zweidimensionalen Formelement ist die wenigstens eine Weichkomponente vorzugsweise ausgespart, so dass das Dekormaterial flächig, entweder direkt oder indirekt mit einer planen Zwischenschicht, an dem Träger anliegt und mit diesem auch vorzugsweise vollflächig verbunden, insbesondere verklebt, ist. Des Weiteren kann das dreidimensionale Formelement mit der wenigstens einen Weichkomponente quasi gefüllt sein bzw. dieses umfassen. Es kann wie das zweidimensionale Formelement eine geometrische Form aufweisen, wie etwa die einer Raute, eines Kreises, einer Ellipse, eines Rechtecks, eines Tropfens, eines Symbols, usw. Es kann auch als Tasche, Kissen, Absteppung oder ähnliches ausgeformt sein. In dem Dekorverbund können eine Anzahl von zweidimensionalen Formelementen und eine Anzahl von dreidimensionalen Formelementen miteinander kombiniert werden, beispielsweise in einem Muster, wobei die so gebildeten einzelnen Formelemente als diskrete Elemente, d.h. durch eine Anzahl von Hartkaschierungen, voneinander abgesetzt, ausgebildet sein können. Je nachdem, welche Weichkomponente verwendet wird, kann das Formelemente flacher oder dicker ausgebildet sein.

Der Begriff "Weichkomponente" kann breit verstanden werden, beispielsweise als jedes Material, das eine geringere Härte als der Träger aufweist, also nicht formstabil ist. Vorzugsweise ist die Weichkomponente eindrückbar, elastisch oder dergleichen mit elastischer Rückformbarkeit. Beispielsweise kann die Weichkomponente ausgewählt sein aus: Abstandsgewirke, Silikon, Schaum bzw. geschäumter Kunststoff, Textil, Vlies, Filz, Kunststoff, z.B. Kunststoffplättchen, PUR Hotmelt, biobasiertem Material, recyceltem Material, Gewebe, Folie, oder ähnlichem. Dabei können verschiedene Weichkomponenten unterschiedliche Dicken aufweisen. Beispielsweise kann die Dicke der Weichkomponente im Bereich von etwa 0,5 mm bis 35 mm liegen. Die Weichkomponente kann lichtdurchlässig, z.B. auch durchleuchtbar oder durchscheinend, oder lichtundurchlässig ausgebildet sein. Die Weichkomponente kann auch Schichten aufweisen, wobei die Anzahl der Schichten variabel ist. Zudem können die vorstehend genannten Materialien der Weichkomponente auch kombiniert sein. Die Weichkomponente kann auch haptische Eigenschaften aufweisen und demnach als Haptikelement oder Haptikschicht bezeichnet werden. Die Weichkomponente kann vor dem Kaschieren, d.h. vor dem Hart- und/oder Weichkaschieren, bzw. vor ihrer Positionierung auf den Träger oder auf die Rückseite des Dekormaterials aufgebracht, z.B. geklebt, werden.

Unter "Hartkaschieren" bzw. unter "Hartkaschierungsabschnitt" kann verstanden werden, dass sich zwischen dem Dekormaterial und dem Träger vernachlässigbar wenig von der oder gar keine Weichkomponente befindet und das Dekormaterial dadurch im Prinzip direkt mit dem Träger durch ein Kaschierverfahren verbunden ist. Dabei kann zwischen dem Dekormaterial und dem Träger eine Klebeschicht ausgebildet sein, mit der das Dekormaterial an dem Träger angebracht bzw. mit diesem verbunden ist.

Dementsprechend kann unter "Weichkaschieren" verstanden werden, dass sich zwischen dem Dekormaterial und dem Träger eine, insbesondere kaum oder gar nicht geschwächte, Weichkomponente befindet, die mit einer Klebeschicht mit dem Dekormaterial verbunden ist und mit einer weiteren Klebeschicht mit dem Träger verbunden ist, also in Sandwichbauweise ausgeführt ist, und so mit einem Kaschierverfahren kaschiert ist.

Es sei angemerkt, dass der Dekorverbund durch eine Kombination von Hartkaschieren und Weichkaschieren hergestellt werden kann. Dabei können die weichkaschierten Abschnitte durch das jeweilige, mit einer Weichkomponente versehene, z.B. mit der Weichkomponente gefüllte, Formelement innerhalb des Hartkaschierungsabschnitts ausgebildet werden. Das Hartkaschieren findet, wie hierin beschrieben, an Randabschnitten des Formelements statt, nämlich dort, wo keine Weichkomponente oder eine nur sehr dünnschichtige Weichkomponente oder Folie, Textil oder dergleichen angeordnet ist.

Zudem sei angemerkt, dass bei Verwendung eines Klebers, der Kleber vorzugsweise neutral bzw. glasklar bis opak und/oder lichttransparent sein kann, zur Vermeidung von ungewollten Farbverschiebungen.

Des Weiteren sei angemerkt, dass zwischen dem Dekormaterial und der Weichkomponente ein Kleber, eine Klebeschicht, oder dergleichen, angeordnet ist.

Gemäß einer Weiterbildung, kann das Dekormaterial zumindest an der die Sichtseite des Dekorverbunds ausbildenden Seite wenigstens eine Naht aufweisen, die in dem wenigstens einen Hartkaschierungsabschnitt angeordnet ist. Im Gegensatz zu einer Naht in einem herkömmlichen, weichkaschierten Dekorverbund, kann die hier eingebrachte Naht, insbesondere in optischer Hinsicht, flach ausgebildet sein, da in dem Hartkaschierungsabschnitt vorzugsweise keine Weichkomponente zwischen dem Dekormaterial und dem Träger angeordnet ist. Dementsprechend kann die wenigstens eine Naht auch als Flachnaht bezeichnet werden. Dadurch kann die Naht nicht verzerrt, sondern optisch gerade, d.h. ohne Nahtverzug, ausgebildet werden. Dies wird dadurch erreicht, dass im Hartkaschierungsabschnitt das Dekormaterial direkt mit dem Träger verbunden ist, z.B. mittels Kaschieren und/oder mittels einer zwischen dem Dekormaterial und dem Träger angeordneten Klebeschicht. Durch die wenigstens eine Naht kann das entsprechende Formelement als Absteppung ausgeführt werden und als solche bezeichnet werden. In fertigungstechnischer Hinsicht kann die wenigstens eine Naht zunächst in das Dekormaterial eingebracht werden. Bei der Naht kann es sich beispielsweise um einen Doppelsteppstich, Kettenstich, auch in unterschiedlichen Stichlängen und Ausführungen, oder um eine andere für Fahrzeuginnenverkleidungsteile geeignete Naht handeln. Zudem ist es möglich, dass die wenigstens eine Naht durchleuchtbar oder lichtdicht ausgestaltet ist, in letzterem Fall also kein Durchscheinen von Licht durch Nadeleinstichlöcher zulässt. Es ist auch möglich, dass verschiedene Garne und/oder Fäden mit unterschiedlichen Eigenschaften, wie etwa unterschiedlichen Stärken, Muster und/oder Farben, unterschiedlichen optischen Erscheinungsbildern, usw., unterschiedliche Fadentexturen, verwendet werden. In einigen Ausführungsformen, kann die wenigstens eine Naht als Ziernaht ausgebildet sein und damit eine vollwertige Naht, d.h. tatsächliche gestochene Naht, nachahmen, wobei eine solche Ziernaht nur in dem Dekormaterial ausgebildet ist. Des Weiteren kann die wenigstens eine Naht innerhalb des Dekormaterials bzw. in der dadurch aufgespannten Ebene bzw. gebildeten Schicht des Dekorverbunds benachbart zu den Formelementen und insbesondere benachbart zu den mit der Weichkomponente versehenen Formelementen angeordnet sein. Zusätzlich oder alternativ dazu, kann die wenigstens eine Naht an einem Formelement ausgebildet sein.

In einer Weiterbildung, kann die wenigstens eine Weichkomponente ein an die Größe und/oder die Form des zugehörigen Formelements, z.B. auch aus einer Mehrzahl von Formelementen, angepasster Zuschnitt sein. Beispielsweise, kann die wenigstens eine Weichkomponente so zugeschnitten sein, dass seine geometrische Form zumindest im Wesentlichen der geometrischen Form des zugehörigen Formelements entspricht, und auch seine Größe der des zugehörigen Formelements zumindest im Wesentlichen entspricht. Dadurch kann die Weichkomponente im Bereich des Hartkaschierungsabschnitts auf einfache Weise ausgespart werden, so dass in dem Hartkaschierungsabschnitt möglichst keine Weichkomponente angeordnet ist und das Dekormaterial möglichst direkt mit dem Träger verbunden werden kann. Zudem ermöglicht der Zuschnitt der Weichkomponente, dass unterschiedliche Formelemente auch unterschiedliche Weichkomponenten, oder manche Formelemente auch gar keine Weichkomponente, aufweisen können.

Gemäß einer Weiterbildung, kann ein erstes aus einer Mehrzahl von Formelementen eine erste Weichkomponente mit ersten Eigenschaften und ein zweites aus der Mehrzahl von Formelementen eine zweite Weichkomponente mit zu den ersten Eigenschaften unterschiedlichen, zweiten Eigenschaften aufweisen. In anderen Worten, können in dem Dekorverbund unterschiedliche Weichkomponenten verwendet werden, um für unterschiedliche Formelemente unterschiedliche Eigenschaften zu erreichen. Beispielsweise können sich die Weichkomponenten von unterschiedlichen Formelementen durch unterschiedliche Materialeigenschaften, Haptik-Eigenschaften, lichtabsorbierenden oder lichtleitenden Eigenschaften, geometrischen Formen, z.B. 2D- und/oder 3D-Formen, ihrer Dicke, ihrer Größe und/oder Form, unterschiedliche Dimensionierungen (z.B. kann der Zuschnitt der Weichkomponente vor dem Zuschnitt als Formteil vorliegen oder nach dem zuschnitt verformt werden oder die Ränder der Formelemente werden vernäht und bekommen dadurch neue Geometrie), usw. voneinander unterscheiden. Es ist auch möglich, dass eine spezifische Weichkomponente mit einer ebenfalls dem Formelement zugeordneten Beleuchtungseinrichtung oder Bedienungseinrichtung oder ähnlichem kombiniert wird. Dadurch kann der Dekorverbund oder das Fahrzeuginnenverkleidungsteil auch mit einem komplex gestalteten und/oder multi-funktionalen Muster, z.B. auch mit unterschiedlichen Beleuchtungseinrichtungen, Bedieneinrichtungen, usw. in den unterschiedlichen Formelementen ausgestaltet werden. Zudem kann vor dem Zuschnitt ein gesamthafte Zuschnitt erfolgen, wobei dieser gesamthafte Zuschnitt mit unterschiedlichen Materialien kombiniert und gefügt sein kann.

In einer Weiterbildung, können die ersten und/oder zweiten Eigenschaften der Weichkomponente ausgewählt sein aus: Dicke der Weichkomponente, Material der Weichkomponente, Typ der Weichkomponente, wie etwa Abstandsgewirke, Kunststoffplättchen, Schaummaterial, Gelpad, Watte, Vlies, Textil oder ähnliches, Elastizität oder Härte, und/oder Lichtdurchlässigkeit. Auf diese Weise können auch unterschiedliche Weichkomponenten in demselben Dekorverbund miteinander kombiniert werden. Es können auch lichtdurchlässige oder lichtundurchlässige Weichkomponenten gezielt ausgewählt und miteinander kombiniert werden, wodurch beleuchtbare Abschnitte und unbeleuchtbare Abschnitte markant voneinander getrennt werden können. Zudem können bei der Halbzeugerstellung, wie z.B. einem Abstandsgewirke, können bereits Nuten/Öffnungen und Durchbrüche im Textil vorgesehen sein.

Gemäß einer Weiterbildung, kann das wenigstens eine Formelement zumindest teilweise eine Erhebung gegenüber dem Hartkaschierungsabschnitt ausbilden. In anderen Worten, kann der Dekorverbund mit einem oder mehreren der Formelemente an seiner Sichtseite eine dreidimensionale Struktur ausbilden, bei der sich die Formelemente als Erhebungen abzeichnen. Dabei können die Formelemente auch unterschiedlich starke Erhebungen ausbilden, indem unterschiedliche Formelemente unterschiedliche Weichkomponenten, oder manche Formelemente auch gar keine Weichkomponente, aufweisen.

In einer Weiterbildung, kann sich in dem wenigstens einen Formelement zwei Weichkomponenten in Dickenrichtung des Formelements einander überlappen. In anderen Worten, können zwei Weichkomponenten in ein und demselben Formelement so angeordnet werden, dass sie in Dickenrichtung des Formelements bzw. des Dekorverbunds einander überlappen. Es ist auch möglich, dass zwei Weichkomponenten innerhalb desselben Formelements eine Stufe in der Dickenrichtung ausbilden. Dadurch lässt sich eine changierende Wirkung der Weichkomponenten erreichen.

Gemäß einer Weiterbildung, kann das Dekormaterial zumindest im Bereich des wenigstens einen Formelements lichtdurchlässig sein. In anderen Worten, kann der Dekorverbund partiell, d.h. formelementspezifisch, hinterleuchtbar oder beleuchtbar sein, indem das Dekormaterial an den gewünschten Stellen, d.h. bei zumindest einem oder mehreren Formelementen, lichtdurchlässig ausgestaltet ist. Beispielsweise kann das Dekormaterial aus einem lichtdurchlässigen Material, z.B. einem Textil oder ähnlichem, bereitgestellt werden, an den gewünschten Stellen perforiert sein, oder auf ähnliche Weise lichtdurchlässig ausgestaltet sein. Dadurch lassen sich in dem Dekorverbund auch partiell beleuchtete Abschnitte bewerkstelligen. Optional kann auch der zugeordnete Hartkaschierungsabschnitt eines derart beleuchtbaren oder hinterleuchtbaren Formelements lichtdurchlässig oder lichtleitend ausgebildet sein, so dass auch eine im Hartkaschierungsabschnitt angeordnete Naht mit beleuchtet oder hinterleuchtet werden kann.

In einer Weiterbildung, kann der Dekorverbund ferner wenigstens eine Lichtquelle aufweisen, die dazu eingerichtet ist, das Dekormaterial und/oder die wenigstens eine Weichkomponente zu beleuchten oder zu hinterleuchten. Die wenigstens eine Lichtquelle kann an unterschiedlichen Positionen des Dekorverbunds angeordnet sein. Beispielsweise ist es möglich, dass die wenigstens eine Lichtquelle auf einer der Sichtseite des Dekorverbunds abgewandten Seite des Trägers angeordnet ist und Licht von dort über den Träger in zumindest eines der Formelemente und/oder zumindest einen der Hartkaschierungsabschnitte einkoppelt. Hierzu kann der Träger lichtdurchlässig, insbesondere transparent, ausgebildet sein. Dabei kann die wenigstens eine Lichtquelle auch in den Träger integriert sein. Es ist aber auch möglich, dass die wenigstens eine Lichtquelle innerhalb eines oder mehrerer der Formelemente angeordnet ist, also zwischen dem Dekormaterial und dem Träger oder einer zu diesem angrenzenden Klebeschicht angeordnet ist, und von dort Licht in die Weichkomponente und/oder das Dekormaterial einkoppelt. In diesem Fall kann die wenigstens eine Lichtquelle auch in die jeweilige Weichkomponente eingebettet sein, z.B. in eine oder mehrere Klebeschichten, zwischen Dekormaterial und Weichkomponente, zwischen Weichkomponente und Träger oder Trägertextil, textilartig eingebettet sein, usw. Zudem kann die wenigstens eine Lichtquelle auch an einer der Sichtseite des Dekorverbunds abgewandten Seite des Dekormaterials angeordnet sein und so Licht direkt in das Dekormaterial einkoppeln. Insbesondere kann die Beleuchtungseinrichtung flächig oder partiell unter dem Träger aufgebracht sein oder zwischen dem Dekorelement und der Weichkomponente, oder zwischen Träger und der Weichkomponente. Auf diese Weise lassen sich auch komplexe Lichtszenarien in dem Dekorverbund realisieren. Die wenigstens eine Lichtquelle kann als einzelne Lichtquelle, als Anordnung mehrerer Lichtquellen, als flächige Lichtquelle, usw. ausgebildet sein. Die Lichtquelle kann mit einem Lichtleiter zusammenwirken. Beispielsweise kann die Lichtquelle wenigstens eine Leuchtdiode (LED), eine Anzeigeeinrichtung oder Display, wie etwa auch eine organische Leuchtdiode (OLED), oder ähnliches umfassen. Der Lichtleiter kann kombiniert sein mit RGB/LED. Zudem kann der Träger auch als Flächenlichtleiter funktionieren bzw. einen solchen ausbilden, z.B. auch mit angekoppelten Leuchtdioden oder dergleichen.

Gemäß einer Weiterbildung, kann der Dekorverbund ferner wenigstens eine Bedieneinrichtung aufweisen, die an oder in dem wenigsten einen Formelement angeordnet und dazu eingerichtet ist, in Abhängigkeit ihrer Betätigung eine Fahrzeugfunktion zu steuern. Beispielsweise ist es möglich, dass die wenigstens eine Bedieneinrichtung eine kapazitive und/oder drucksensitive Erfassungs- und/oder Bedieneinrichtung aufweist, die dazu eingerichtet sein kann, eine Betätigung des zugeordneten Formelements zu erfassen. Bei der kapazitiven Erfassungs- und/oder Bedieneinrichtung kann es sich beispielsweise um eine kapazitive Folie oder ähnliches handeln. Alternativ oder zusätzlich dazu, kann die wenigstens eine Bedieneinrichtung einen oder mehrere Drucksensoren oder dergleichen aufweisen, die einen darauf aufgebrachten Druck erfasst und entsprechend eine Bedienung oder Betätigung erkennt. Die wenigstens eine Bedieneinrichtung kann mit einer oder mehreren Steuereinrichtungen, insbesondere Steuergeräten, des Fahrzeugs verbunden sein, worüber eine oder mehrere Fahrzeugfunktionen in Abhängigkeit einer Betätigung der Bedieneinrichtung gesteuert werden können. Die damit zu steuernden Fahrzeugfunktionen können vielseitig sein. Beispielsweise kann darüber die Beleuchtung des Dekorverbunds gesteuert werden, z.B. durch Ein- und Ausschalten der Beleuchtungseinrichtung in Abhängigkeit der Betätigung der Bedieneinrichtung. Auf ähnliche Weise können auch andere Fahrzeugfunktionen, wie Türbetätigung, Klima, Navigation usw., über die wenigstens eine Bedieneinrichtung gesteuert werden. Durch die diskret zueinander ausgebildeten Formelemente sind vielseitige Konfigurationen und Bedienmöglichkeiten möglich.

Vorgeschlagen wird zudem ein Verfahren zum Herstellen eines Dekorverbunds für ein Fahrzeuginnenverkleidungsteil. Der Dekorverbund kann mittels des Verfahrens gemäß einer oder mehreren der vorstehend beschriebenen Ausführungsvarianten hergestellt werden.

In dem Verfahren werden ein Träger und ein Dekormaterial bereitgestellt, wobei das Dekormaterial eine Sichtseite des Dekorverbunds ausbildet. Das Verfahren umfasst ferner ein Bereitstellen von wenigstens einer Weichkomponente. Des Weiteren werden das Dekormaterials und die wenigstens eine Weichkomponente relativ zueinander positioniert und diese mittels eines Klebers miteinander verbunden. Zudem wird wenigstens ein Formelement an einer Sichtseite des Dekorverbunds ausgebildet, wobei das wenigstens eine Formelement zumindest abschnittsweise bzw. teilweise, z.B. unterbrochen durch einen oder mehrere Materialstege, von wenigstens einem Hartkaschierungsabschnitt umgeben ist und durch diesen abgesetzt ist, z.B. vom benachbarten oder angrenzenden Bereich, von einem weiteren Formelement, usw., und wobei in dem Hartkaschierungsabschnitt das Dekormaterial unter Aussparung oder Schwächung der wenigstens einen Weichkomponente mittels eines Klebers mit dem Träger verbunden wird.

Wie oben im Zusammenhang mit dem Dekorverbund beschrieben, ermöglicht das Hartkaschieren benachbart zu dem jeweiligen Formelement und/oder in dessen Randbereich auch eine direkte Verbindung, z.B. Klebung, zwischen Dekormaterial und Träger, wodurch eine konturgenaue ganzflächige Kaschierung und exakte Eingrenzung der Weichkomponente und/oder des Formelements erreicht werden kann. Zudem können, wie oben beschrieben, die Formelemente beleuchtet werden und/oder als Bedienelement, z.B. durch Vorsehen einer Bedieneinrichtung in oder an einem Formelement, ausgestaltet werden. Ist eine Naht gewünscht, kann diese in dem Hartkaschierungsabschnitt vorgesehen werden, welcher eine optisch unverzerrte Naht begünstigt.

Zur möglichen Ausgestaltung des Trägers, des Dekormaterials, der Weichkomponente, des Hartkaschierungsabschnitts, der Naht, der Beleuchtungseinrichtung, der Bedieneinrichtung, usw., wird auf den oben beschriebenen Dekorverbund verwiesen.

Das Weichkaschieren und/oder Hartkaschieren kann beispielsweise durch ein Gummituchkaschierverfahren, durch Membrankaschieren, durch Schweißen, durch Presskaschieren, durch Handkaschieren oder ein anderes geeignetes Kaschierverfahren erfolgen.

Gemäß einer Weiterbildung, kann das Dekormaterial zunächst als Zuschnitt bereitgestellt werden, in dem optional auch wenigstens eine Naht eingebracht werden kann. Zudem wird die wenigstens eine Weichkomponente als Zuschnitt bereitgestellt. Optional kann der Zuschnitt der Weichkomponente derart erfolgen, dass die Weichkomponente flächig, jedoch gitterartig, netzartig, lochblendenartig oder dergleichen bereitgestellt wird, indem einzelne Abschnitte der Weichkomponente, zweidimensionale oder dreidimensionale Weichkomponentenzuschnitte, die die Formelemente mit ausbilden, durch Verbindungsstege miteinander verbunden sind oder bleiben. Auf diese Weise kann die Weichkomponente als zusammenhängendes flächiges Gebilde relativ zu dem Träger und/oder dem Dekormaterial positioniert werden, z.B. mittels einer Positionierhilfe, wie etwa eine einer Schablone oder ähnlichem, und die Verbindungsstege anschließend entfernt werden, um so die Weichkomponente in dem jeweiligen Hartkaschierungsabschnitt auszusparen. Für die Entfernung der Verbindungsstege zwischen den diskreten Abschnitten der Weichkomponente kann beispielsweise eine Schneideeinrichtung, wie etwa ein Laser, verwendet werden. Diese Verbindungsstege, oder allgemein Materialreste, die beim Zuschnitt entstehen, können beispielsweise mit einem Klebeband entfernt werden. Bevorzugt wird der Laserbeschnitt schon vorher am Material durchgeführt, und/oder auch die Schwächung.

In einer Weiterbildung, kann eine Applikation der Weichkomponente(n) mittels eines Materialspenders erfolgen. Hierbei kann ein jeweiliger Zuschnitt der Weichkomponente in einer Art Magazin des Materialspenders vorgehalten und von diesem gehalten werden. Dabei kann der jeweilige Zuschnitt der Weichkomponente mit einer zu verklebenden Fläche aus dem Materialspender heraus auf einer Positionierhilfe, z.B. Fügeplatte, positioniert werden und durch z.B. einen Walzauftrag mit einem Kleber versehen werden, um darauf den Träger und/oder das Dekormaterial aufzubringen. Alternativ oder zusätzlich dazu, kann auch der mit einem Kleber versehene Träger und/oder das mit einem Kleber versehene Dekormaterial auf die im Materialspender vorgehaltene Weichkomponente aufgebracht werden.

In einer Weiterbildung, können zunächst eine oder mehrere Weichkomponenten durch Materialspender auf einer Positions-/Fixierplatte positioniert. dann erfolgt ein Walzenauftrag mit Kleber zum Beschichten der Weichkomponente(n). Dann wird das Dekormaterial auf der oder den Weichkomponenten positioniert. Durch Kleberaktivierung wird ein Sandwich aus dem Dekormaterial und der oder den Weichkomponenten erzeugt. Dann wir das Sandwich auf den Träger kaschiert, wodurch die 3D Form, z.B. durch den Kaschierprozess, gebildet wird.

In einer weiteren Variante werden die eine oder mehreren Weichkomponenten durch den Materialspender auf Positions-/Fixierplatte positioniert. Bereits mit Kleber beschichtetes Dekor wird auf der oder den Weichkomponenten positioniert. Dann wird der Kleber aktiviert, um ein Sandwich aus dem Dekormaterial und der oder den Weichkomponenten zu erzeugen. Dann wird dieses Sandwich auf den Träger kaschiert, wobei die 3 D Form durch z.B. durch ein Gummituchverfahren, usw. gebildet wird. Oder dieses Sandwich wird vor dem eigentlichen Kaschiervorgang des Trägers vorgeformt, für die 3D-Struktur, und dann auf den Träger kaschiert.

Weitere Merkmale, Vorteile und Anwendungsmöglichkeiten der Erfindung ergeben sich aus der nachfolgenden Beschreibung von vorteilhaften Ausführungsformen und den begleitenden Figuren.

### Kurze Figurenbeschreibung

Nachfolgend wird ein vorteilhaftes Ausführungsbeispiel der Erfindung unter Bezugnahme auf die begleitenden Figuren erläutert. Es zeigen:
- Fig. 1: in einer schematischen Schnittansicht einen Dekorverbund mit daran ausgebildeten Formelementen, die durch Hartkaschierungsabschnitte voneinander abgegrenzt sind, gemäß einer Ausführungsform.
- Fig. 2: in einer schematischen Schnittansicht einen Dekorverbund mit daran ausgebildeten Formelementen, die durch Hartkaschierungsabschnitte voneinander abgegrenzt sind, und einer Beleuchtungseinrichtung, gemäß einer Ausführungsform.
- Fig. 3: in einer schematischen Schnittansicht einen Dekorverbund mit daran ausgebildeten Formelementen, die durch Hartkaschierungsabschnitte voneinander abgegrenzt sind, und einer Beleuchtungseinrichtung und/oder Bedieneinrichtung, gemäß einer Ausführungsform.
- Fig. 4: in einer schematischen Draufsicht einen beleuchtbaren und/oder hinterleuchtbaren Dekorverbund gemäß einer Ausführungsform.
- Fig. 5: in einer perspektivischen Draufsicht einen Dekorverbund mit daran ausgebildeten Formelementen, die durch Hartkaschierungsabschnitte voneinander abgegrenzt sind, gemäß einer Ausführungsform.
- Fig. 6: in einem Flussdiagramm zum Herstellen eines Dekorverbunds gemäß einer Ausführungsform.
- Fig. 7: in Teilfiguren 7A, 7B und 7C ein Verfahren zum Bereitstellen und/oder Positionieren einer Weichkomponente zum Herstellen eines Dekorverbunds gemäß einer Ausführungsform.
- Fig. 8: in einer schematischen Seiten- oder Schnittansicht einen Materialspender für eine Weichkomponente zum Herstellen eines Dekorverbunds gemäß einer Ausführungsform.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung von Ausführungsformen

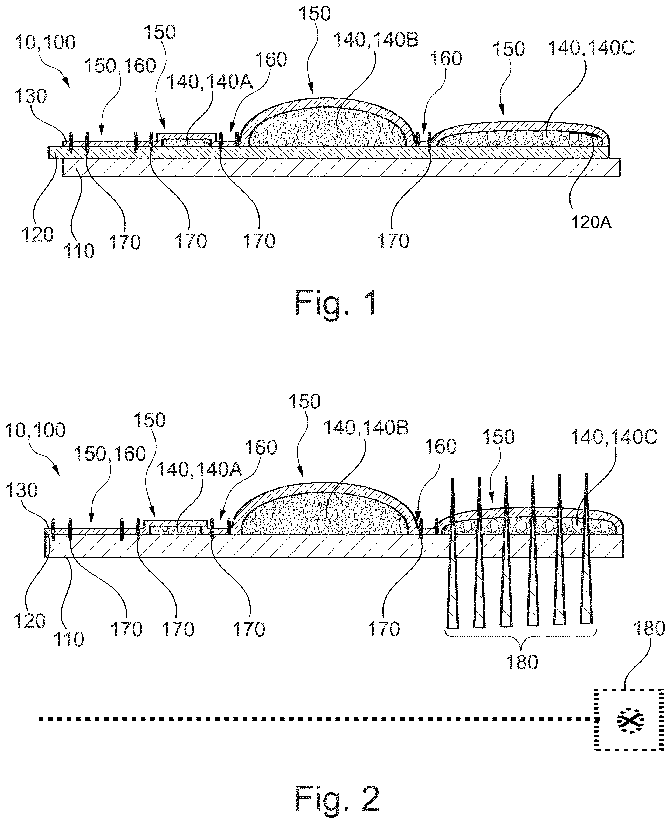

Fig. 1 zeigt in einer schematischen Seiten- bzw. Schnittansicht einen Dekorverbund 100, der Teil eines Fahrzeuginnenverkleidungsteils 10 sein oder dieses ausbilden kann. Das Fahrzeuginnenverkleidungsteil 10 kann beispielsweise eine Instrumententafel, eine Türverkleidung, eine Seitenverkleidung oder ähnliches sein.

Der Dekorverbund 100 weist einen Träger 110, einen optionalen Kleber 120, ein Dekormaterial 130 und wenigstens eine Weichkomponente 140 auf. Dementsprechend weist der Dekorverbund 100 vorzugsweise einen Schichtaufbau auf. Es sei angemerkt, dass die Materialen und Komponenten des Dekorverbunds 100 durch Kleben mit dem Kleber 120, durch Heißverprägen oder ein anderes geeignetes Verfahren miteinander verbunden werden können, weshalb der Kleber 120 hier als optional anzusehen ist und das Bezugszeichen "120" auch allgemein eine Verbindung, Verbindungsschicht oder dergleichen kennzeichnen kann.

Das Dekormaterial 130 bildet mit einer Seite eine Sichtseite des Dekorverbunds 100 aus. Der Träger 110 ist an einer der Sichtseite abgewandten Seite des Dekormaterials 130 angeordnet. Die wenigstens eine Weichkomponente 140 ist zumindest abschnittsweise zwischen dem Träger 110 und dem Dekormaterial 130 angeordnet.

Gemäß Fig. 1 weist der Dekorverbund 100 an der Sichtseite wenigstens ein Formelement 150 auf, das zumindest abschnittsweise von wenigstens einem Hartkaschierungsabschnitt 160 umgeben und durch diesen abgesetzt. In Fig. 1 sind zur Illustration der vielfältigen Gestaltungsmöglichkeiten mehrere Formelemente 150 dargestellt, wobei auch nur ein einziges Formelement 150 ausgebildet sein kann. Dabei ist in dem Hartkaschierungsabschnitt 160 das Dekormaterial 130 unter Aussparung oder Schwächung der wenigstens einen Weichkomponente 140 mittels des Klebers 120 mit dem Träger 110 verbunden. D.h., dass sich zwischen dem Dekormaterial 130 und dem Träger 110 vernachlässigbar wenig von der oder gar keine Weichkomponente 130 befindet und das Dekormaterial 130 dadurch im Prinzip direkt mit dem Träger 110 durch ein geeignetes Kaschierverfahren verbunden ist. In Abgrenzung von dem Hartkaschierungsabschnitt 160 kann ein Abschnitt, z.B. in einem Formelement 150 mit darin angeordneter Weichkomponente 140, in dem die Weichkomponente 140 mit dem Dekormaterial 130 und/oder dem Träger 110 mittels eines geeigneten Kaschierverfahrens verbunden ist, als Weichkaschierungsabschnitt bezeichnet werden. Im Prinzip lassen sich in dem Dekorverbund 100 also weichkaschierte Abschnitte und der wenigstens eine Hartkaschierungsabschnitt 150 voneinander unterscheiden, wobei letzterer eine möglichst vollflächige Anlage des Dekormaterials 130 an dem Träger 110 ermöglicht.

Des Weiteren kann gemäß Fig. 1 der Dekorverbund 100 insbesondere im Bereich des Hartkaschierungsabschnitts 160 optional wenigstens eine Naht 170 aufweisen, die durch das Hartkaschieren nicht verzerrt wird und somit eine optisch gerade und hochwertig anmutende Naht ausbildet. Die wenigstens eine Naht 170 kann dabei auch nur in dem Dekormaterial 130 ausgebildet sein. Dabei kann die Naht mit dem Dekormaterial 130 hartkaschiert sein oder sich auch in dem Dekormaterial 130 oberhalb der Weichkomponente 140 befinden.

Zudem können gemäß Fig. 1 auch unterschiedliche Weichkomponenten 140 innerhalb des Dekorverbunds 100 miteinander kombiniert werden, was hier durch die Bezugszeichen 140A, 140B und 140C angedeutet ist, die beispielsweise unterschiedliche Weichkomponenten 140 mit unterschiedlichen Eigenschaften bezeichnen. So ist es möglich, dass die Weichkomponenten 140A, 140B, 140C zueinander unterschiedliche Eigenschaften, wie etwa Materialeigenschaften, geometrische Formen, Dicken, lichtleitende oder lichtabsorbierende Eigenschaften, usw., aufweisen. Beispielsweise kann die Weichkomponente 140 ausgewählt sein aus: Abstandsgewirke, Silikon, Schaum bzw. geschäumter Kunststoff, PUR, Textil, Vlies, Filz, Kunststoff, z.B. Kunststoffplättchen, biobasiertem Material, recyceltem Material, Gewebe, Folie, oder ähnlichem. Es ist gemäß Fig. 1 auch möglich, dass ein Formelement 150 unter kompletter Aussparung einer Weichkomponente 140 hartkaschiert ausgebildet ist, so dass der Dekorverbund 100 an jener Stelle entsprechend flach ausgebildet ist. Andererseits bilden die Formelemente 150, die eine Weichkomponente 140 aufweisen, eine dreidimensionale Struktur mit Erhebung gegenüber dem Träger 110 aus. Dabei kann die Weichkomponente 140 auch ein Haptikgefühl vermitteln, das sich von Formelement 150 zu Formelement 150 durch entsprechende Auswahl der Weichkomponente 140 unterscheiden kann.

Zur Veranschaulichung dieser vielseitigen Gestaltungsmöglichkeiten des Dekorverbunds 100 ist in Fig. 1 ein linksseitiges Formelement 150 lediglich hartkaschiert, und im angrenzenden bzw. zugeordneten Hartkaschierungsabschnitt 160 mit einer Naht 170 versehen. Das nächste Formelement 150 rechts davon weist die Weichkomponente 140A mit ersten Eigenschaften auf, wobei dieses Formelement 150 ebenfalls von einem Hartkaschierungsabschnitt 160 mit einer Naht 170 umgeben ist. Das wiederum nächste Formelement 150 weiter rechts weist die Weichkomponente 140B mit zweiten Eigenschaften auf, wobei auch dieses Formelement 150 von einem Hartkaschierungsabschnitt 160 mit einer Naht 170 umgeben ist. Das in Fig. 1 rechtsseitige Formelement 150 weist die Weichkomponente 140C mit dritten Eigenschaften auf, wobei dieses Formelement 150 wiederum von einem Hartkaschierungsabschnitt 160 mit einer Naht 170 umgeben ist. In anderen Worten, sind die Formelemente 150 durch die dazwischen angeordneten Hartkaschierungsabschnitte 160 als diskrete, d.h. voneinander abgesetzte, Elemente ausgebildet. Dabei können unterschiedliche Eigenschaften von Weichkomponenten 140 miteinander kombiniert werden.

Aus Fig. 1 geht auch hervor, dass die Formelemente 150 dreidimensionale Strukturen an dem Dekorverbund 100 ausbilden, die sich in ihrer Dicke bzw. Erhabenheit voneinander unterscheiden können, indem eine entsprechende Weichkomponente 140 bzw. 140A, 140B, 140C mit den gewünschten Eigenschaften in das entsprechende Formelement 150 eingebettet oder darin angeordnet wird. Es ist auch möglich, dass die Weichkomponenten 140A, 140B, 140C mit unterschiedliche Haptikeigenschaften ausgewählt werden, um für unterschiedliche Formelemente 150 eine gewünschte Haptik zu erreichen.

Ferner geht aus Fig. 1 hervor, dass zwischen dem Dekormaterial 130 und der Weichkomponente 140 eine Klebeschicht 120A angeordnet sein kann, wie dies hier exemplarisch an der Weichkomponente 140C angedeutet ist. Optional kann diese Klebeschicht 120A an jeder Weichkomponente 140 hin zu dem Dekormaterial 130 ausgebildet sein.

Fig. 2 zeigt in einer schematischen Seiten- oder Schnittansicht den Dekorverbund 100 aus Fig. 1 mit einer zusätzlichen, auch partiell ausgestaltbaren, Beleuchtungseinrichtung 180, mit der wenigstens eines der Formelemente 150 und/oder wenigstens einer der Hartkaschierungsabschnitte 160 mit oder ohne Naht 170 beleuchtbar oder hinterleuchtbar ist. Die Beleuchtungseinrichtung 180 weist eine oder mehrere Lichtquelle auf, die hier durch Lichtstrahlen angedeutet sind. Es sei angemerkt, dass die Beleuchtungseinrichtung 180 als flächige Beleuchtung oder als punktuelle Beleuchtung ausgebildet sein kann. Zudem sei angemerkt, dass in Fig. 2 zwar nur ein Formelement 150 beleuchtet oder hinterleuchtet ist, jedoch auch mehrere Formelemente 150, ggf. auch auf unterschiedliche Weise, beleuchtet oder hinterleuchtet sein können. In einem beleuchteten oder hinterleuchteten Formelement 150 weist die darin angeordnete Weichkomponente 140, in Fig. 2 lediglich exemplarisch die Weichkomponente 140C, vorzugsweise lichtdurchlässige, lichtleitende oder transparente Eigenschaften auf. Zudem kann je nach Anordnung der Beleuchtungseinrichtung 180 auch der Träger 110 lichtdurchlässige, lichtleitende oder transparente Eigenschaften aufweisen. Dabei können die Hartkaschierungsabschnitt 160 ebenfalls beleuchtet sein, und/oder eine Beleuchtungseinrichtung und/oder eine Bedienungseinrichtung wie die Formelemente 150 aufweisen, oder mit einer separaten Bedieneinrichtung ausgestattet sein. Beispielsweise kann der Hartkaschierungsabschnitt 160 lichtdurchlässig oder, nach Art einer Lichtabschottung, lichtundurchlässig sein.

In Fig. 2 ist eine Ausführungsvariante der Beleuchtungseinrichtung 180 mit gestrichelten Linien angedeutet, bei der die Lichtquelle, angedeutet durch ein Lichtquellensymbol, Licht in einen Flächenlichtleiter einkoppelt, der wiederum Licht in den Träger 110 bzw. den Dekorverbund 100 einkoppelt.

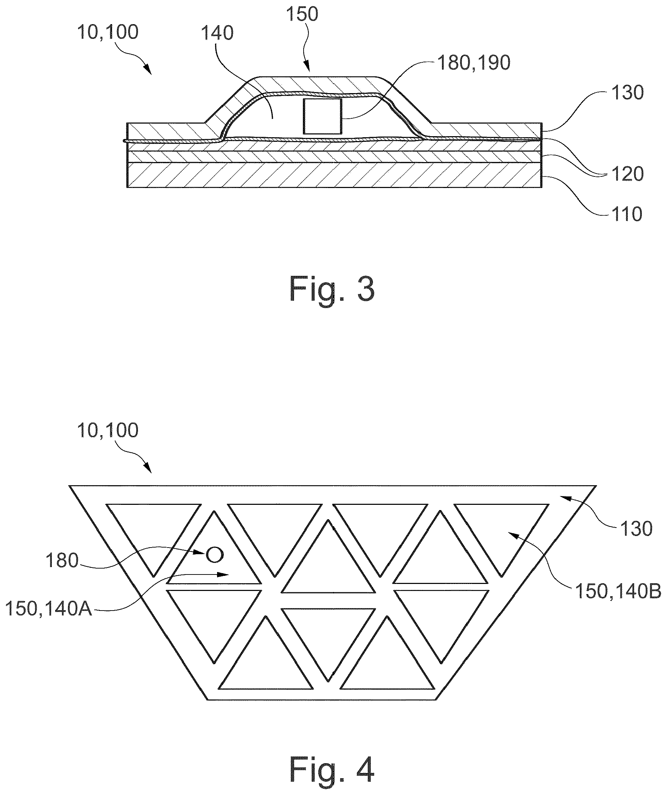

Fig. 3 zeigt in einer schematischen Seiten- oder Schnittansicht ein einzelnes Formelement 150 des Dekorverbunds mit einer darin angeordneten Beleuchtungseinrichtung 180 und/oder einer darin angeordneten Bedieneinrichtung 190, die hier nur schematisch angedeutet sind, um das Funktionsprinzip zu veranschaulichen. Die Bedieneinrichtung 190 und die Beleuchtungseinrichtung 180 können auch ein Bestandteil einer integrierten Beleuchtungs-/Bedieneinrichtung sein. Die Beleuchtungseinrichtung 180 und/oder die Bedieneinrichtung 190 ist in das Formelement 150, und vorzugsweise auch in die zugehörige Weichkomponente 140, eingebettet. Sie können auch textilartig eingebettet sein. Die Beleuchtungseinrichtung 180 ist wie oben beschrieben zur Beleuchtung oder Hinterleuchtung des zugehörigen Formelements 150 eingerichtet und umfasst wenigstens eine Lichtquelle, wie etwa eine Leuchtdiode (LED), organische Leuchtdiode (OLED) oder eine andere geeignete Lichtquelle. Die Bedieneinrichtung 190 ist dazu eingerichtet, bei Betätigung eine zugeordnete Fahrzeugfunktion zu steuern, kann also insbesondere als Schalter oder ähnliches verstanden werden. Hierzu ist die Bedieneinrichtung 190 mit einem entsprechenden Fahrzeugsystem und/oder einer Steuereinrichtung verbunden, um beispielsweise die Beleuchtungseinrichtung 180, eine Klimafunktion, eine Entertainmentfunktion, ein Türbetätigung oder eine andere geeignete Fahrzeugfunktion zu betätigen und/oder zu steuern. Beispielsweise ist es möglich, dass die wenigstens eine Bedieneinrichtung 190 eine kapazitive und/oder drucksensitive Erfassungs- und/oder Bedieneinrichtung aufweist, die dazu eingerichtet sein kann, eine Betätigung des zugeordneten Formelements zu erfassen. Bei der kapazitiven Erfassungs- und/oder Bedieneinrichtung kann es sich beispielsweise um eine kapazitive Folie oder ähnliches handeln. Alternativ oder zusätzlich dazu, kann die wenigstens eine Bedieneinrichtung einen oder mehrere Drucksensoren oder dergleichen aufweisen, die einen darauf aufgebrachten Druck erfasst und entsprechend eine Bedienung oder Betätigung erkennt. Optional weist der Dekorverbund 100 gemäß Fig. 3 zusätzlich ein Trägermaterial auf, das zwischen dem Träger 110 und dem Dekormaterial 130 angeordnet ist.

Anhand von Fig. 4, die den Dekorverbund 100 bzw. das damit ausgebildete oder ausgestattete Fahrzeuginnenverkleidungsteil 10 in einer schematischen Draufsicht zeigt, sollen nun exemplarische Beleuchtungs- oder Hinterleuchtungsszenarien erläutert werden. Das Dekormaterial 130 ist hier lichtdurchlässig oder transparent ausgebildet, z.B. durch eine Perforation, die wahlweise auch mit einem lichtdurchlässigen oder transparenten Material befüllt sein kann. Eines oder mehrere der Formelemente 150 weist eine lichtdurchlässige Weichkomponente 140 auf, die zur besseren Veranschaulichung mit "140A" bezeichnet ist. Eines oder mehrere weitere Formelemente 150 weisen eine lichtundurchlässige Weichkomponente 140 auf, die zur besseren Veranschaulichung mit "140B" bezeichnet ist. Dort, wo das Formelement 150 die lichtundurchlässige Weichkomponente 140B aufweist, ist die Beleuchtungseinrichtung 180 angedeutet. Diese gezielte Anordnung von lichtdurchlässigen Weichkomponenten 140 bzw. 140A und lichtundurchlässigen Weichkomponenten 140 bzw. 140B ermöglicht voneinander exakt abgegrenzte Lichtbereiche, insbesondere, wenn die jeweilige lichtundurchlässige Weichkomponente 140 bzw. 140B eine Abschottung des Lichts bewerkstelligt. Es sei angemerkt, dass der Dekorverbund 100 auch durch einen oder mehrere Flächenlichtleiter hinter- oder durchleuchtet werden kann.

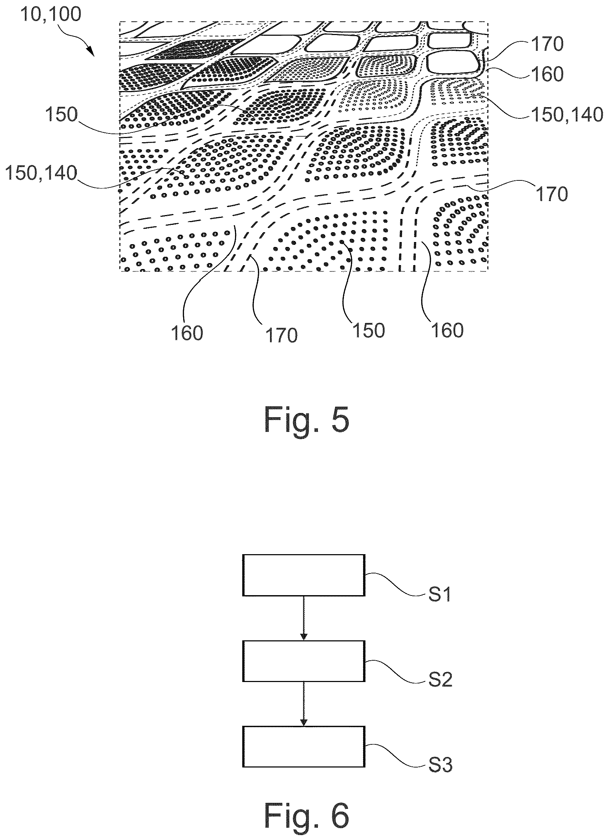

Fig. 5 zeigt den Dekorverbund 100 bzw. das damit ausgebildete oder ausgestattete Fahrzeuginnenverkleidungsteil 10 nun in einer perspektivischen Draufsicht, mit einem lediglich beispielhaften Muster von Formelementen 150, dazwischen angeordneten Hartkaschierungsabschnitten 160 und darin angeordneten Nähten 170. Gemäß Fig. 4, weisen einige der Formelemente 150 eine zugeordnete Weichkomponente 140 auf, die jedoch jeweils in dem Hartkaschierungsabschnitten 160 ausgespart ist. Wie zu erkennen ist, ergeben sich so die diskret zueinander ausgebildeten Formelemente 150, die auch zueinander unterschiedliche Dicken aufweisen bzw. unterschiedlich stark erhaben sind. Den Nähten 170 ist jedoch gemeinsam, dass sie durch den jeweiligen Hartkaschierungsabschnitt 160 unverzerrt bleiben und optisch hochwertig anmuten. Einzelne, einige oder sämtliche der Formelemente 150 können zudem mit der Beleuchtungseinrichtung 180 und/oder der Bedieneinrichtung 190 versehen sein, also optional auch beleuchtet oder hinterleuchtet sein und/oder als Betätigungselement für eine Fahrzeugfunktion dienen.

Anhand von Fig. 6, die ein Flussdiagramm zeigt, soll nun ein Verfahren zum Herstellen des oben beschriebenen Dekorverbunds 100 und/oder des Fahrzeuginnenverkleidungsteils 10 erläutert werden.

In einem Schritt S1, werden der Träger 110, das Dekormaterial 130 und die wenigstens eine Weichkomponente 140 bereitgestellt. Dies kann gleichzeitig oder nacheinander in einer beliebigen Reihenfolge erfolgen. In einem Schritt S2, werden das Dekormaterials 130 und die wenigstens eine Weichkomponente 140, und ggf. der Träger 110, relativ zueinander positioniert derselben mittels eines Klebers 120 miteinander verbunden. In einem Schritt S3, wird das wenigstens eine Formelement 150 an einer Sichtseite des Dekorverbunds 100 ausgebildet, die zumindest abschnittsweise von dem wenigstens einen Hartkaschierungsabschnitt 160 umgeben und durch diesen voneinander abgesetzt sind. Dabei wird in dem Hartkaschierungsabschnitt 160 das Dekormaterial 130 unter Aussparung oder Schwächung der wenigstens einen Weichkomponente 140 mittels eines Klebers 120 mit dem Träger 110 verbunden.

Dieses Verfahren kann in vielerlei Hinsicht abgewandelt werden. Beispielsweise kann die Weichkomponente 140 als, insbesondere smarter, Zuschnitt bereitgestellt werden. Hierbei kann das Dekormaterial 130, z.B. auch flächig, mit der Weichkomponente 140 versehen, z.B. auch beschichtet, werden. Dann erfolgt der smarte Zuschnitt der Weichkomponente 140 bis zum Dekormaterial 130 mittels z.B. eines Lasers. Danach werden die entsprechende Materialreste, als Abfall, herausgelöst. Dann erfolgt das Verbinden der Elemente bzw. Materialien wie hierin beschrieben mittels eines Kaschierverfahrens.

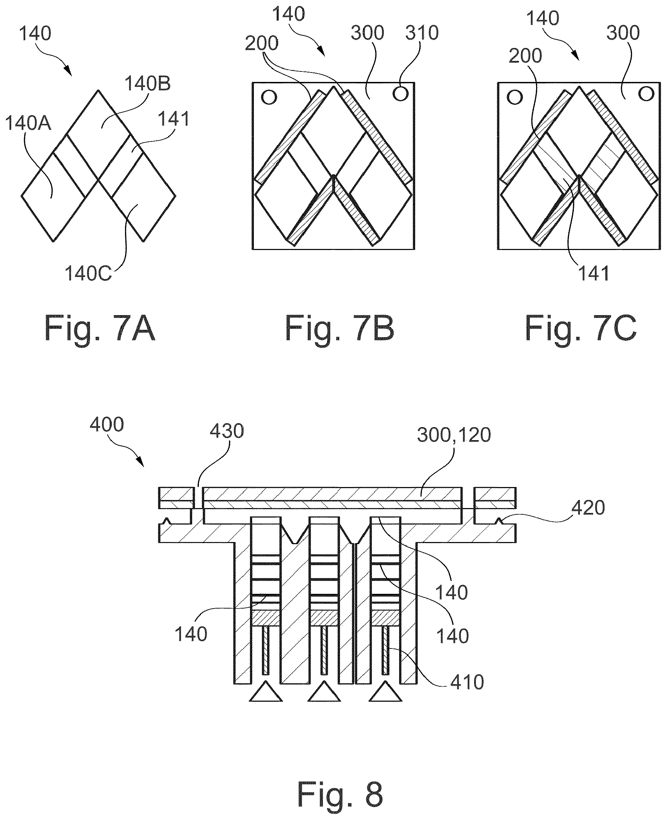

Fig. 7 zeigt in Teilfiguren 7A, 7B und 7C die Bereitstellung der Weichkomponente 140 als einen solchen Zuschnitt. Gemäß Fig. 7A wird eine Anzahl von Weichkomponenten 140 als flächiges Element bereitgestellt, wobei die einzelnen Weichkomponenten 140A, 140B, 140C durch dazwischenliegende Verbindungsstege 141 oder, allgemein Materialreste, verbunden sind, die gegenüber der Weichkomponente 140 selbst schwächer ausgebildet sein können. Der jeweilige Verbindungssteg 141 kann beispielsweise durch Schwächen und/oder Schneiden, etwa mittels eines Lasers oder dergleichen, ausgebildet werden. Gemäß Fig. 7B wird die als flächiges Element bereitgestellte Weichkomponente 140 durch eine Positionierhilfe 200, 300 positioniert, nämlich relativ zu dem Dekormaterial 130 und/oder dem Träger 110. Die Positionierhilfe 200 ist beispielsweise eine Art Schablone oder Halter. Die Positionierhilfe 300 ist beispielsweise eine Kleberauftragsschablone mit einer oder mehreren Positionierhilfen 310. Hierbei sind die einzelnen Weichkomponenten 140A, 140B, 140C noch über die Verbindungsstege 141 miteinander verbunden. Gemäß Fig. 7C werden dann der jeweilige Verbindungssteg 141 entfernt und so die Weichkomponenten 140A, 140B, 140C voneinander getrennt und vereinzelt. Es sei angemerkt, dass die Positionierung gemäß der gewünschten Anordnung von Formelementen 150 durchgeführt wird.

Des Weiteren kann das Verfahren auch dahingehend abgewandelt werden, dass ein Materialspender 400 verwendet wird, der in einem oder mehreren Spendern 410 oder Magazinen Zuschnitte der Weichkomponente 140 vorhält. Die Spender 410 weisen zum Fördern der darin gehaltenen beispielsweise eine Feder auf, die dazu eingerichtet ist, die Zuschnitte der Weichkomponente 140 in Richtung der Positionierhilfe 300, z.B. Kleberauftragsschablone, zu fördern. Hierzu können die Spender 410 auch mittels eines Aktuators, z.B. elektrisch, hydraulisch, pneumatisch, usw., entsprechend betätigt werden. Es ist möglich, dass unterschiedliche Spender 410 unterschiedliche Ausführungsvarianten der Weichkomponente 140 vorhalten, die beispielsweise unterschiedliche Materialien, Dicken usw. aufweisen können. Die Zuschnitte der Weichkomponente 140 werden dadurch in Richtung der Positionierhilfe 300 aus dem jeweiligen Spender 410 herausgefördert. Auf der Positionierhilfe 300 ist ein Kleber 120 aufgebracht, wobei Abstandshalter 420 verhindern, dass die Positionierhilfe 300 an dem Materialspender 400 anklebt und Führungen 430 eine genaue Positionierung von Positionierhilfe 300 und Materialspender 400 zueinander erlauben. Durch Andrücken der Positionierhilfe 300 an die aus den Spendern 410 geförderten Zuschnitten der Weichkomponente 140 werden diese mit der Positionierhilfe 300 verklebt und können mit dieser entfernt werden. Anschließend können die nun auf der Positionierhilfe 300 befindlichen Zuschnitte der Weichkomponente 140 nun auf der der Positionierhilfe abgewandten Seite wiederum mit Kleber 120 versehen werden und positionsgenau relativ zu dem Dekormaterial 130, das in einer geeigneten Schablone gehalten sein kann, positioniert und mit diesem verbunden.

Ausgehend von den oben beschriebenen Ausführungsformen, können der Dekorverbund 100 und/oder das Verfahren zum Herstellen des Dekorverbunds 100 in vielerlei Hinsicht abgewandelt werden.

So ist es möglich, mittels eines Heißprägeverfahrens eine Oberflächenstruktur in das Dekormaterial 130 bzw. der Sichtseite des Dekorverbunds 100 einzubringen. Eine solche Oberflächenstruktur kann verschiedene geometrische und/oder optisch wahrnehmbare Formen aufweisen, wie etwa eine Narbe, eine Linie, usw. Dies kann während oder nach dem Ausbilden des wenigstens einen Formelements 150 erfolgen.

Zudem können die Verbindungsstege 141 oder, allgemein Materialreste, die beim Zuschnitt der Weichkomponente 140 und/oder des Dekormaterials 130 anfallen, mittels eines Klebebands entfernt werden.

Des Weiteren können zwei Weichkomponenten 140 mit unterschiedlichen Zuschnitteigenschaften, wie etwa unterschiedlicher Größe oder dergleichen, übereinander oder in Dickenrichtung überlappend angeordnet und zusammengefügt werden.

### BEZUGSZEICHENLISTE

- 10: Fahrzeuginnenverkleidungsteil
- 100: Dekorverbund
- 110: Träger
- 120: Kleber oder Klebeschicht
- 130: Dekormaterial
- 140: Weichkomponente
- 141: Verbindungssteg
- 150: Formelement
- 160: Hartkaschierungsabschnitt
- 170: Naht
- 180: Beleuchtungseinrichtung
- 190: Bedieneinrichtung
- 200: Positionierhilfe
- 300: Positionierhilfe
- 400: Materialspender
- 410: Spender oder Magazin
- 420: Abstandshalter
- 430: Führung

## Patentansprüche

1. Dekorverbund (100) für ein Fahrzeuginnenverkleidungsteil (10), aufweisend:
ein Dekormaterial (130), das mit einer Seite eine Sichtseite des Dekorverbunds (100) ausbildet,
einen Träger (110), der an einer der Sichtseite abgewandten Seite des Dekormaterials (130) angeordnet ist, und
wenigstens eine Weichkomponente (140) oder Folie, die zumindest abschnittsweise zwischen dem Träger (110) und dem Dekormaterial (130) angeordnet ist,
wobei der Dekorverbund (100) an der Sichtseite wenigstens ein Formelement (150) aufweist, das zumindest abschnittsweise von wenigstens einem Hartkaschierungsabschnitt (160) umgeben und durch diesen abgesetzt ist, und wobei in dem Hartkaschierungsabschnitt (160) das Dekormaterial (130) unter Aussparung oder Schwächung der wenigstens einen Weichkomponente (140) oder Folie mit dem Träger (110) verbunden ist.

2. Dekorverbund nach Anspruch 1, wobei das Dekormaterial (130) zumindest an der die Sichtseite des Dekorverbunds (100) ausbildenden Seite wenigstens eine Naht (170) aufweist, die in dem wenigstens einen Hartkaschierungsabschnitt (160) angeordnet ist.

3. Dekorverbund nach Anspruch 1 oder 2, wobei die wenigstens eine Weichkomponente (140) ein an die Größe und/oder Form des zugehörigen Formelements aus der Mehrzahl von Formelementen (150) angepasster Zuschnitt ist.

4. Dekorverbund nach einem der vorhergehenden Ansprüche, wobei ein erstes aus der Mehrzahl von Formelementen (150) eine erste Weichkomponente (140, 140A, 140B, 140C) mit ersten Eigenschaften und ein zweites aus der Mehrzahl von Formelementen (150) eine zweite Weichkomponente (140, 140A, 140B, 140C) mit zu den ersten Eigenschaften unterschiedlichen, zweiten Eigenschaften aufweist.

5. Dekorverbund nach Anspruch 4, wobei die ersten und/oder zweiten Eigenschaften der Weichkomponente (140) ausgewählt sind aus: Dicke der Weichkomponente, Material der Weichkomponente, Typ der Weichkomponente, wie etwa Abstandsgewirke, Kunststoffplättchen, Schaummaterial, Gelpad, Watte, Vlies, Textil, Textilart oder ähnliches, Elastizität oder Härte, Stauchhärte, Shorehärte, Gewicht, Struktur, und/oder Lichtdurchlässigkeit.

6. Dekorverbund nach einem der vorhergehenden Ansprüche, wobei die Mehrzahl von Formelementen (150) zumindest teilweise eine Erhebung gegenüber dem Hartkaschierungsabschnitt (160) ausbilden.

7. Dekorverbund nach einem der vorhergehenden Ansprüche, wobei das Dekormaterial (130) zumindest im Bereich von zumindest einem aus der Mehrzahl von Formelementen (150) lichtdurchlässig ist.

8. Dekorverbund nach einem der vorhergehenden Ansprüche, ferner aufweisend wenigstens eine Beleuchtungseinrichtung (180), die dazu eingerichtet ist, das Dekormaterial (130), den wenigstens einen Hartkaschierungsabschnitt (160) und/oder die wenigstens eine Weichkomponente (140) zu beleuchten oder zu hinterleuchten.

9. Dekorverbund nach einem der vorhergehenden Ansprüche, ferner aufweisend wenigstens eine Bedieneinrichtung (190), die an oder in zumindest einem aus der Mehrzahl von Formelementen (150) angeordnet und dazu eingerichtet ist, in Abhängigkeit ihrer Betätigung eine Fahrzeugfunktion zu steuern.

10. Verfahren zum Herstellen eines Dekorverbunds (100) für ein Fahrzeuginnenverkleidungsteil (10), mit den Schritten:
Bereitstellen eines Trägers (110),
Bereitstellen eines Dekormaterials (130), das mit einer Seite eine Sichtseite des Dekorverbunds (100) ausbildet,
Bereitstellen wenigstens einer Weichkomponente (140) oder Folie,
Positionieren des Dekormaterials (130) und der wenigstens einen Weichkomponente (140) relativ zueinander und Verbinden derselben mittels eines Klebers,
Ausbilden von zumindest einem Formelement (150) an einer Sichtseite des Dekorverbunds (100), das zumindest abschnittsweise von wenigstens einem Hartkaschierungsabschnitt (160) umgeben und durch diesen abgesetzt ist, wobei in dem Hartkaschierungsabschnitt (160) das Dekormaterial (130) unter Aussparung oder Schwächung der wenigstens einen Weichkomponente (140) oder Folie mit dem Träger (110) verbunden wird.
